(19) Europäisches Patentamt
European Patent Office
Office européen des brevets

(11) Veröffentlichungsnummer: **0 260 226**
**A2**

(12) # EUROPÄISCHE PATENTANMELDUNG

(21) Anmeldenummer: **87810477.7**

(22) Anmeldetag: **24.08.87**

(51) Int. Cl.4: **C 08 K 5/34**
C 08 K 5/37, C 08 K 5/41,
C 08 L 57/08, C 08 L 27/06

(30) Priorität: **29.08.86 CH 3481/86**

(43) Veröffentlichungstag der Anmeldung:
**16.03.88 Patentblatt 88/11**

(84) Benannte Vertragsstaaten: **DE FR GB IT**

(71) Anmelder: **CIBA-GEIGY AG**
**Klybeckstrasse 141**
**CH-4002 Basel (CH)**

(72) Erfinder: **Michaelis, Klaus-Peter, Dr.**
**Am Hangweg 8**
**D-6145 Lindenfels/Odenwald (DE)**

(54) **Stabilisierte chlorhaltige Polymerisate.**

(57) Chlorhaltiges Polymerisat enthaltend a) mindestens eine Verbindung der Formel I

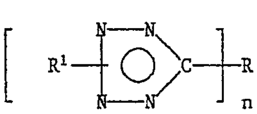 (I),

worin $R^1$ Wasserstoff, $C_1$-$C_4$-Alkyl, $C_5$-$C_6$-Cycloalkyl, Phenyl oder durch $C_1$-$C_4$-Alkyl oder Halogen substituiertes Phenyl ist, n 1 oder 2 bedeutet und wenn n 1 ist, R $C_1$-$C_{20}$-Alkyl, durch -OH oder -SH substituiertes $C_1$-$C_{20}$-Alkyl, durch

-O-, -S- , 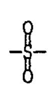 , 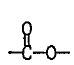 oder 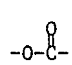

unterbrochenes $C_2$-$C_{20}$-Alkyl, Phenyl, durch $C_1$-$C_4$-Alkyl substituiertes Phenyl, Benzyl, durch $C_1$-$C_4$-Alkyl substituiertes Benzyl, $C_5$-$C_6$-Cycloalkyl oder $-NR^2R^3$ bedeutet, worin $R^2$ und $R^3$ gleich oder verschieden sind und die für $R^1$ angegebenen Bedeutungen besitzen, und wenn n 2 ist, R eine direkte Bindung, $C_1$-$C_{10}$-Alkylen, durch Phenyl, Benzyl, -OH, $C_1$-$C_4$-Alkoxy, $C_1$-$C_{20}$-Acyloxy, Phenylsulfonyl oder durch $C_1$-$C_4$-Alkylsulfonyl substituiertes $C_1$-$C_{10}$-Alkylen oder durch

-O-, -S- , 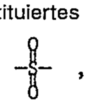 , 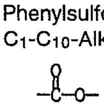 oder 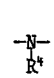

unterbrochenes

$C_2$-$C_{10}$-Alkylen bedeutet, worin $R^4$ Wasserstoff, $C_1$-$C_4$-Alkyl, Phenyl, Benzyl, Naphthyl, Cyclohexyl oder $C_1$-$C_{20}$-Acyl ist, oder R ferner $C_2$-$C_{10}$-Alkyliden, Phenylen, Benzylen oder Xylylen bedeutet, und b) mindestens eine Organozinnverbindung und/oder Bleiverbindung und/oder organische Antimonverbindung.

EP 0 260 226 A2

**Beschreibung**

Stabilisierte chlorhaltige Polymerisate

Die vorliegende Erfindung betrifft ein gegen den schädigenden Einfluss von Licht und/oder Wärme stabilisiertes chlorhaltiges Polymerisat enthaltend a) mindestens ein Tetrazol und b) mindestens eine Organozinnverbindung und/oder Bleiverbindung und/oder organische Antimonverbindung sowie die Verwendung eines Gemisches aus den erwähnten Komponenten a) und b) zum Stabilisieren eines chlorhaltigen Polymerisats.

Es ist bekannt, dass chlorhaltige Polymerisate gegen den schädigenden Einfluss von Licht und/oder Wärme, insbesondere bei der Verarbeitung zu Formteilen, geschützt werden müssen. Aus dem US-Patent 4 196 110 ist ein mit einem Tetrazol und einem Gemisch von Ca/Zn-Stearat stabilisiertes Polyvinylchlorid bekannt. In der deutschen Patentschrift 1 134 197 wird die Verwendung von Tetrazolen und deren Salzen zum Stabilisieren von chlorhaltigen Polymerisaten und Mischpolymerisaten beschrieben.

Die vorliegende Erfindung betrifft ein chlorhaltiges Polymerisat enthaltend a) mindestens eine Verbindung der Formel I

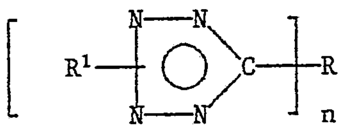 (I),

worin $R^1$ Wasserstoff, $C_1$-$C_4$-Alkyl, $C_5C_6$-Cycloalkyl, Phenyl oder durch $C_1$-$C_4$-Alkyl oder Halogen substituiertes Phenyl ist, n 1 oder 2 bedeutet und wenn n 1 ist, R $C_1$-$C_{20}$-Alkyl, durch -OH oder -SH substituiertes $C_1$-$C_{20}$-Alkyl, durch

-O-, -S-, 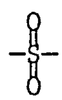, 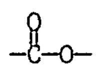 oder 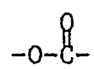

unterbrochenes $C_2$-$C_{20}$-Alkyl, Phenyl, durch $C_1$-$C_4$-Alkyl substituiertes Phenyl, Benzyl, durch $C_1$-$C_4$-Alkyl substituiertes Benzyl, $C_5$-$C_6$-Cycloalkyl oder $-NR^2R^3$ bedeutet, worin $R^2$ und $R^3$ gleich oder verschieden sind und die für $R^1$ angegebenen Bedeutungen besitzen, und wenn n 2 ist, R eine direkte Bindung, $C_1$-$C_{10}$-Alkylen, durch Phenyl, Benzyl, -OH, $C_1$-$C_4$-Alkoxy, $C_1$-$C_{20}$-Acyloxy, Phenylsulfonyl oder durch $C_1$-$C_4$-Alkylsulfonyl substituiertes $C_1$-$C_{10}$-Alkylen oder durch

-O-, -S-, 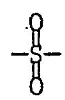, 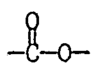 oder 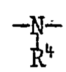 unterbrochenes

$C_2$-$C_{10}$-Alkylen bedeutet, worin $R^4$ Wasserstoff, $C_1$-$C_4$-Alkyl, Phenyl, Benzyl, Naphthyl, Cyclohexyl oder $C_1$-$C_{20}$-Acyl ist, oder R ferner $C_2$-$C_{10}$-Alkyliden, Phenylen, Benzylen oder Xylylen bedeutet, und b) mindestens eine Organozinnverbindung und/oder Bleiverbindung und/oder organische Antimonverbindung.

Die Kombination von einem Tetrazol mit mindestens einer Organozinnverbindung und/oder Bleiverbindung und/oder organischen Antimonverbindung besitzt überraschenderweise einen günstigen Einfluss auf die Farbstabilität von chlorhaltigen Polymerisation bei der thermoplastischen Verarbeitung, insbesondere aber bei der Bewitterung daraus hergestellter Artikel.

$R^1$, $R^2$, $R^3$ und $R^4$ bedeuten als $C_1$-$C_4$-Alkyl zum Beispiel Methyl, Ethyl, Propyl, Isopropyl, n-Butyl, Isobutyl oder tert-Butyl.

R, $R^1$, $R^2$ und $R^3$ bedeuten als $C_5$-$C_6$-Cycloalkyl beispielsweise Cyclopentyl oder Cyclohexyl.

$R^1$, $R^2$ und $R^3$ bedeuten als Phenyl, welches durch $C_1$-$C_4$-Alkyl oder Halogen substituiert ist, zum Beispiel Tolyl, Xylyl oder 3-Chlorphenyl.

R kann als $C_1$-$C_{20}$-Alkyl beispielsweise die oben für $R^1$ als $C_1$-$C_4$-Alkyl angegebenen Definitionen besitzen und ausserdem zusätzlich Pentyl, Hexyl, 2-Ethylhexyl, Octyl, Dodecyl, Hexadecyl, Octadecyl oder Eicosyl bedeuten. Bevorzugt ist $C_1$-$C_8$-Alkyl und besonders bevorzugt $C_1$-$C_6$-Alkyl.

Beispiele für R als durch

-O-, -S-, 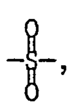, 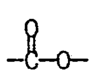 oder 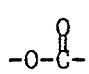

unterbrochenes $C_2$-$C_{20}$-Alkyl oder durch -OH oder -SH substituiertes $C_1$-$C_{20}$-Alkyl sind: Methoxyethyl, Ethoxymethyl, Propoxypropyl, Butoxyethyl, Octoxyethyl, Octadecyloxyethyl, Methylthiaethyl, Hexylthiaethyl, Propylsulfonylethyl, Methoxycarbonylmethyl, Dodecanoyloxyethyl, Ethylcarbonyloxyethyl, Hydroxyethyl, Hydroxybutyl oder Mercaptoethyl. $C_2$-$C_{12}$-Alkoxyalkyl, $C_2$-$C_{12}$-Alkylthiaalkyl und $C_2$-$C_{12}$-Hydroxyalkyl sind bevorzugt.

R bedeutet als Phenyl, welches durch $C_1$-$C_4$-Alkyl substituiert ist, beispielsweise Tolyl oder Xylyl.

R bedeutet als Benzyl, welches durch $C_1$-$C_4$-Alkyl substituiert ist, zum Beispiel Methylbenzyl, Dimethylbenzyl oder Butylbenzyl.

R bedeutet als $C_1$-$C_{10}$-Alkylen beispielsweise Methylen, Ethylen, 1,2- oder 1,3-Propylen, 1,2-, 1,3- oder 1,4-Butylen, 1,5-Pentylen, 1,1-Dimethylpropylen, 2,2-Dimethylpropylen, 1,5-Hexylen, 1,4-Heptylen, 1,2- oder 1,6-Octylen, 1,2- oder 1,10-Decylen. $C_1$-$C_8$-Alkylen ist bevorzugt und besonders bevorzugt ist $C_1$-$C_6$-Alkylen.

Beispiele für R als durch Phenyl, Benzyl, -OH, $C_1$-$C_4$-Alkoxy, $C_1$-$C_{20}$-Acyloxy, Phenylsulfonyl oder $C_1$-$C_4$-Alkylsulfonyl substituiertes $C_1$-$C_{10}$-Alkylen oder durch

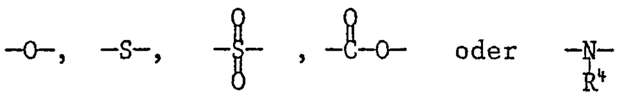

oder

unterbroches $C_2$-$C_{10}$-Alkylen sind: 2-Phenyl-1,3-proplen, 1,2-Diphenylethylen, Benzyliden, Diphenylmethyliden, 2-Hydroxy-1,3-propylen, 3-Formyloxypentylen, 2-Propionyloxy-1,3-propylen, 2-Octadecanoyloxy-1,3-propylen, 2-Methoxy-1,3-propylen oder ein Rest der Formel $-C_mH_{2m}$-X-$C_m$-$H_{2m}$-, worin X beispielsweise

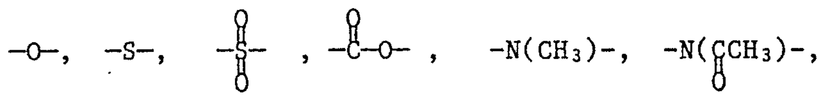

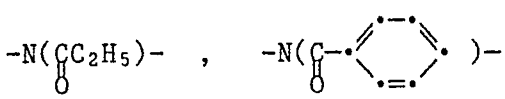

bedeutet

und m eine ganze Zahl von 1 bis 5 ist.

Falls R als $C_1$-$C_{10}$-Alkylen durch die Gruppe $C_1$-$C_{20}$-Acyloxy substituiert ist, so bedeutet $C_1$-$C_{20}$-Acyloxy bevorzugt $C_1$-$C_{18}$-Alkanoyloxy (wie z.B. Formyloxy, Acetoxy, Propionyloxy oder Octadecanoyloxy), $C_3$-$C_{10}$-Alkenoyloxy (wie z.B. Acryloyloxy oder Crotonoyloxy), Benzoyloxy und besonders bevorzugt $C_1$-$C_{10}$-Alkanoyloxy.

R bedeutet als $C_2$-$C_{10}$-Alkyliden zum Beispiel Ethyliden, Propyl-2-iden, Butyl-2-iden, Pentyl-3-iden, Hexyl-3-iden oder Decyl-5-iden. $C_2$-$C_8$-Alkyliden ist bevorzugt.

$R^4$ bedeutet als $C_1$-$C_{20}$-Acyl bevorzugt Benzoyl, $C_1$-$C_{10}$-Alkanoyl (wie z.B. Formyl, Acetyl, Propionyl oder Pentanoyl) oder $C_3$-$C_{10}$-Alkenoyl (wie z.B. Acryloyl oder Methacryloyl). $C_1$-$C_{10}$-Alkanoyl ist besonders bevorzugt.

<u>Bevorzugte Beispiele für Verbindungen der Formel I sind:</u>

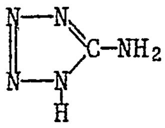

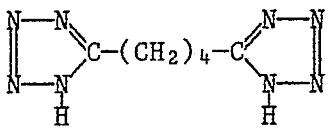

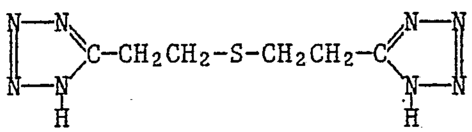

Beispiele für Organozinnverbindungen sind:

I) Organozinnmercaptide, insbesondere solche der Formeln IIa und IIb,

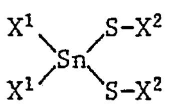
(IIa)

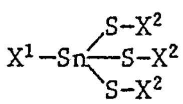
(IIb)

worin $X^1$ $C_6$-$C_{20}$-Alkoxycarbonylalkyl oder $C_1$-$C_{20}$-Alkyl, bevorzugt $C_1$-$C_{12}$-Alkyl und besonders bevorzugt Methyl, n-Butyl, n-Octyl oder n-Dodecyl bedeutet und $X^2$ $C_6$-$C_{20}$-Alkoxycarbonylalkyl, $C_6C_{20}$-Alkylcarbonyloxyalkyl oder $C_4$-$C_{18}$-Alkyl, insbesondere Isooctyl, ist.

$X^1$ und $X^2$ bedeuten als $C_6$-$C_{20}$-Alkoxycarbonylalkyl zum Beispiel ($C_4$-$C_{17}$-Alkyl)-O-CO-$CH_2CH_2$- oder ($C_4$-$C_{18}$-Alkyl)-O-CO-$CH_2$-, wie z.B. Hexoxycarbonylethyl, Isooctoxycarbonylmethyl, Isooctoxycarbonylethyl oder Dodecyloxycarbonylethyl. Isooctoxycarbonylethyl ist bevorzugt.

$X^2$ bedeutet als $C_6$-$C_{20}$-Alkylcarbonyloxyalkyl zum Beispiel ($C_4$-$C_{17}$-Alkyl)-CO-O-$CH_2CH_2$-, insbesondere Isooctylcarbonyloxyethyl.

Bevorzugt sind Methylzinn-tris[alkylthioglykolat], n-Butylzinn-tris[alkylthioglykolat], n-Butoxycarbonylethylzinn-tris[alkylthioglykolat], Dimethylzinn-bis[alkylthioglykolat], Din-n-butylzinn-bis[alkylthioglykolat], Bis[n-butoxycarbonylethyl]zinn-bis[alkylthioglykolat], Methylzinn-tris[alkylthiopropionat], n-Butylzinn-tris[alkylthiopropionat], n-Butoxycarbonylethylzinn-tris[alkylthiopropionat], Dimethylzinn-bis[alkylthiopropionat], Di-n-butylzinn-bis[alkylthiopropionat] und Bis[n-Butoxycarbonylethyl]zinn-bis[alkylthiopropionat], wobei Alkyl beispielsweise Isooctyl (=2-Ethylhexyl), Dodecyl, Tridecyl oder Tetradecyl bedeutet. Besonders bevorzugt sind Di-n-butylzinn-bis [isooctylthioglykolat], n-Butylzinn-tris[n-tetradecylthioglykolat], Di-n-octylzinn-bis-[isooctylthioglykolat] und n-Octylzinn-tris[isooctylthioglykolat].

Als Organozinnmercaptide seien auch die Verbindungen der Formel IIc genannt,

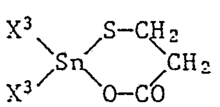
(IIc)

worin $X^3$ $C_1$-$C_{20}$-Alkyl ist.

II) Organozinnsulfide wie Di-[$C_1$-$C_{18}$-Alkyl]zinnsulfide bzw. $C_1$-$C_{18}$-Alkylthiostannonsäuren, insbesondere das cyclische Di-n-butylzinnsulfid der Formel IId und die adamantanartige n-Butylthiostannonsäure der Formel IIe.

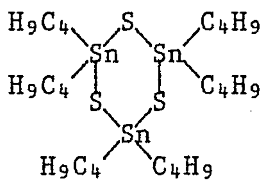 (IId),

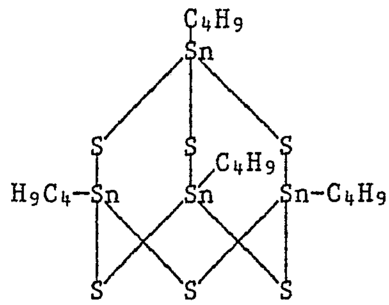 (IIe)

III) Organozinncarboxylate, insbesondere solche der Formel IIf,

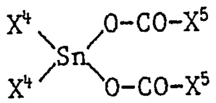 (IIf)

worin $X^4$ und $X^5$ $C_1$-$C_{20}$-Alkyl sind und $X^5$ zusätzlich ($C_1$-$C_{20}$-Alkyl)-O-CO-CH=CH- bedeutet.

$X^4$ und $X^5$ sind bevorzugt $C_1$-$C_{10}$-Alkyl. Besonders bevorzugt ist $X^4$ als n-Butyl oder n-Octyl.

Von Interesse ist die Verbindung Di-n-butylzinn-bis[methylmaleat].

Als Organozinncarboxylate seien auch die Verbindungen der Formel IIg genannt,

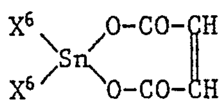 (IIg)

worin $X^6$ $C_1$-$C_{20}$-Alkyl bedeutet.

Beispiele für Bleiverbindungen sind:

Tribasisches Bleisulfat 3 $PbO \bullet PbSO_4 \bullet H_2O$
Dibasisches Bleiphosphit 2 $PbO \bullet PbHPO_3 \bullet \frac{1}{2} H_2O$
Dibasisches Bleiphthalat 2 $PbO \bullet Pb(OOC)_2C_6H_4$
Dibasisches Bleistearat 2 $PbO \bullet Pb(OOCC_{17}H_{35})_2$
Neutrales Bleistearat $Pb(OOCC_{17}H_{35})_2$
Dibasisches Bleicarbonat $2PbO \bullet PbCO_3$

Beispiele für organische Antimonverbindungen sind:

Antimonmercaptide, insbesondere Verbindungen der Formel IIh,

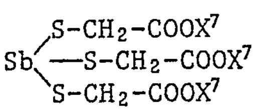 (IIh)

worin $X^7$ $C_4$-$C_{18}$-Alkyl, bevorzugt Isooctyl, bedeutet.

In den vorangegangenen Ausführungen bedeutet der Ausdruck $C_1$-$C_{20}$-Alkyl beispielsweise Methyl, Ethyl, Propyl, Isopropyl, n-Butyl, Isobutyl, tert-Butyl, Pentyl, Hexyl, Octyl, Dodecyl, Hexadecyl, Octadecyl oder Eicosyl.

Von Interesse ist ein chlorhaltiges Polymerisat enthaltend a) mindestens eine Verbindung der Formel I, worin für den Fall n=1 R $C_1$-$C_{12}$-Alkyl, durch -O-, -S- oder $-\underset{\underset{O}{\|}}{C}-O-$ unterbrochenes $C_2$-$C_{12}$-Alkyl oder durch -OH- oder -SH substituiertes $C_1$-$C_{12}$-Alkyl, Phenyl, Benzyl oder $-NR^2R^3$ bedeutet, worin $R^2$ und $R^3$ unabhängig voneinander Wasserstoff oder $C_1$-$C_4$-Alkyl sind, und für den Fall n=2 R $C_1$-$C_6$-Alkylen, durch -O-, -S- oder $-N(R^4)-$ unterbrochenes $C_2$-$C_6$-Alkylen oder durch -OH substituiertes $C_1$-$C_6$-Alkylen, Phenylen, Benzylen oder Xylylen ist und b) mindestens eine Organozinnverbindung und/oder Bleiverbindung und/oder organische Antimonverbindung.

Von besonderem Interesse ist ein chlorhaltiges Polymerisat enthaltend a) mindestens eine Verbindung der Formel I, worin $R^1$ Wasserstoff, $C_1$-$C_4$-Alkyl oder Phenyl, bevorzugt Wasserstoff, bedeutet und b) mindestens eine Organozinnverbindung und/oder Bleiverbindung und/oder organische Antimonverbindung.

Bevorzugt ist ein chlorhaltiges Polymerisat enthaltend a) mindestens eine Verbindung der Formel I, worin n 1 ist und R $C_1$-$C_6$-Alkyl, durch -OH substituiertes $C_1$-$C_6$-Alkyl oder $-NR^2R^3$ bedeutet, worin $R^2$ und $R^3$

unabhängig voneinander Wasserstoff oder $C_1$-$C_4$-Alkyl sind, und b) mindestens eine Organozinnverbindung und/oder Bleiverbindung und/oder organische Antimonverbindung.

Wenn n 1 ist, bedeutet R bevorzugt $-HN_2$.

In bevorzugt eingesetzten Verbindungen der Formel I ist n 2.

Besonders bevorzugt ist ein chlorhaltiges Polymerisat enthaltend a) mindestens eine Verbindung der Formel I, worin n 2 ist und R $C_1$-$C_6$-Alkylen, durch -S-, -O- oder Phenylimino unterbrochenes $C_2$-$C_6$-Alkylen oder durch -OH substituiertes $C_1$-$C_6$-Alkylen, insbesondere $C_1$-$C_6$-Alkylen oder durch -S- unterbrochenes $C_2$-$C_6$-Alkylen, bedeutet und b) mindestens eine Organozinnverbindung und/oder Bleiverbindung und/oder organische Antimonverbindung.

Weiterhin bevorzugt ist ein chlorhaltiges Polymerisat enthaltend a) mindestens eine Verbindung der Formel I und b) mindestens eine Organozinnverbindung und/oder Bleiverbindung.

Von besonderem Interessse ist ein chlorhaltiges Polymerisat enthaltend a) mindestens eine Verbindung der Formel I und b) mindestens eine Organozinnverbindung.

Ein weiterer Gegenstand der Erfinding ist die Verwendung eines Gemisches enthaltend a) mindestens eine Verbindung der Formel I und b) mindestens eine Organozinnverbindung und/oder Bleiverbindung und/oder organische Antimonverbindung zum Stabilisieren von einem chlorhaltigen Polymerisat gegen den schädigenden Einfluss von Licht und/oder Wärme.

Bei den chlorhaltigen Polymerisaten handelt es sich bevorzugt um Vinylchloridhomopolymere oder -copolymere. Weiterhin bevorzugt sind Suspensions- und Massepolymere und Emulsionspolymere. Als Comonomere für die Copolymerisate kommen z.B. in Frage: Vinylacetat, Vinylidenchlorid, Transdichlorethen, Ethylen, Proplen, Butylen, Maleinsäure, Acrylsäure, Fumarsäure, Itaconsäure. Weitere geeignete chlorhaltige Polymere sind nachchloriertes PVC und chlorierte Polyolefine, ferner Pfropfpolymerisate von PVC mit EVA, ABS und MBS. Polyvinylchlorid ist als chlorhaltiges Polymerisat besonders bevorzugt.

Das Verhältnis von a) Tetrazol zu b) Organozinnverbindung und/oder Bleiverbindung und/oder organischer Antimonverbindung beträgt zweckmässigerweise 1:4 bis 2:1, insbesondere 1:2 bis 2:1.

Die Einsatzkonzentration der Stabilisatormischung bestehend aus der Komponente a) und der Komponente b) liegt beispielsweise zwischen 0,5 bis 10, bevorzugt 1 bis 5 Gew.%, bezogen auf das zu stabilisierende chlorhaltige Polymerisat.

Die chlorhaltigen Polymerisate können auch in üblichen Mengen weitere herkömmliche PVC-Stabilisatoren enthalten, wie beispielsweise Epoxyverbindungen, vorzugsweise epoxidierte Fettsäureester, wie epoxidiertes Sojabohnenöl, oder ferner phenolische Antioxidantien oder Phosphite, wie z.B. Trioctyl-, Tridecyl-, Tridodecyl-, Tritetradecyl-, Tristearyl-, Trioleyl-, Triphenyl-, Trikresyl-, Tris[p-nonylphenyl]- oder Tricyclohexylphosphit und besonders bevorzugt Aryl-dialkyl- sowie Alkyl-diarylphosphite, wie z.B. Phenyl-didecyl-, Nonylphenyl-didecyl-, (2,4-Di-tert-butylphenyl)-didodecyl- oder (2,6-Di-tert-butylphenyl)-didodecylphosphit, oder/und ferner Me(II)-Carboxylate und/oder Me(II)-Phenolate oder -Alkylphenolate, insbesondere Nonylphenolate, wobei Me(II) Ba, Ca, Cd, Mg oder Zn ist und Carboxylat das Anion einer Carbonsäure mit 7 bis 20 C-Atomen bedeutet. Als Carboxylate seien z.B. genannt: Stearate, Oleate, Laurate, Palmitate, Benzoate, Behenate, Hydroxystearate oder 2-Ethylhexanoate.

Die Tetrazole der Formel I können vorzugsweise auch zusammen mit einem Gemisch aus Ba/Cd/Pb-Verbindungen eingesetzt werden, wobei die einzelnen Komponenten dieses Gemisches die oben angegebenen Bedeutungen besitzen können.

Je nach dem Verwendungszweck der Polymerisate können vor oder bei der Einarbeitung der Stabilisatoren auch weitere Zusätze verwendet werden, wie zum Beispiel Gleitmittel (bevorzugt Montanwachse oder Glycerinester), Modifikatoren (Schlagzäh-Zusätze), Pigmente, Lichtschutzmittel (UV-Absorber), Flammschutzmittel, Antistatika, Füllstoffe (Russ, Asbest, Kaolin, Talk, Glasfasern), optische Aufheller, Fettsäureester, Paraffine, Weichmacher.

Die Verbindungen der Formel I sind bekannt (teilweise im Handel erhältlich) oder können in Analogie zu bekannten Verfahren, beispielsweise wie in US-4 196 110 und für den Fall R = $-NR^2R^3$in Chem. Ber. 42, 2336 (1909) beschrieben, hergestellt werden.

Die folgenden Beispiele erläutern die Erfindung weiter. Alle Mengenangaben entsprechen Gewichtsteilen, soweit nicht anders angegeben.

In den Beispielen 1-13 werden folgende Abkürzungen verwendet:

Tetrazol 1: 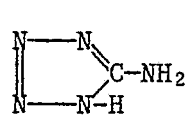

Tetrazol 2: 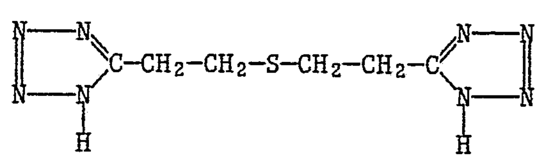

A: Gemisch aus n-Butylzinn-tris[isooctylthioglykolat] und Di-n-butylzinn-bis[isooctylthioglykolat] im Verhältnis 1:2,5.

B: Gemisch aus n-Butylzinn-tris[n-tetradecylthioglykolat] und Di-n-butylzinn-bis[n-tetradecylthioglykolat] im Verhältnis 3:1.

C: Gemisch aus Di-n-butylzinn-bis[methylmaleat] und n-Butylzinn-tris[methylmaleat] im Verhältnis 60:1.

D: basische Bleiverbindung (®Naftovin T 90)

Beispiele 1-2: Thermostabilität (transparente Anwendung)

68 g der unten angegebenen Rezeptur werden in einem Brabender-Plastographen bei 40 Umdrehungen pro Minute und bei einer Knetertemperatur von 180°C verarbeitet. Alle 5 Minuten wird eine Probe von ca. 1 g entnommen und zu einer Platte von 1 mm Dicke verpresst. Der "Yellowness Index" (YI) der Prüfmuster wird gemäss ASTM D 1925-70 bestimmt. Die Ergebnisse sind in Tabelle I aufgeführt.

Rezeptur:

| | |
|---|---|
| Polyvinylchlorid (®Dalvin 1467) | 100 Teile |
| ®Paraloid KM 334 B | 7,0 Teile |
| ®Paraloid K 120 N | 1,5 Teile |
| ®Irgawax 367 (Gleitmittel) | 0,8 Teile |

Stabilisatorsystem gemäss Tabelle 1

(®Paraloid KM 334 B und ®Paraloid K 120 N sind übliche Verarbeitungshilfen für Polyvinylchlorid)

Tabelle 1:

| Beispiel | Stabilisatorsystem | YI nach Belastungszeit in Minuten | | | |
|---|---|---|---|---|---|
| | | 5 | 10 | 15 | 20 |
| 1 | 1 Teil A<br>0,5 Teile Tetrazol 2 | 24,5 | 57,1 | 105 | 136 |
| 2 | 1 Teil B<br>0,5 Teile Tetrazol 2 | 19,3 | 44,3 | 85,4 | 105 |

Beispiele 3-4: Thermostabilität (transparente Anwendung)

100 g der unten angegebenen Rezeptur werden auf ein auf 180°C vorgeheiztes Mischwalzwerk gegeben. Nach Bildung eines Walzfelles werden im Zeitintervall von 5 Minuten Walzfellmuster von exakt 0,3 mm Dicke entnommen und an diesen der "Yellowness-Index" nach ASTM D 1925-70 bestimmt.

Die Ergebnisse sind in Tabelle 2 aufgeführt.

<u>Rezeptur</u>:

| | |
|---|---|
| Polyvinylchlorid (®Dalvin 1467) | 100 Teile |
| ®Paraloid KM 334 B | 7,0 Teile |
| ®Paraloid K 120 N | 1,5 Teile |
| ®Irgawax 367 (Gleitmittel) | 0,8 Teile |

Stabilisatorsystem gemäss Tabelle 2

Tabelle 2:

| Beispiel | Stabilisatorsystem | YI nach Belastungszeit in Minuten 5 | 10 | 15 | 20 | 25 | 30 | 35 | 40 | 45 | 50 | 55 | 60 | 65 | 70 |
|---|---|---|---|---|---|---|---|---|---|---|---|---|---|---|---|
| 3 | 1 Teil B<br>0,5 Teile Tetrazol 2 | 10,7 | 13,4 | 17,8 | 22,8 | 27,1 | 31,8 | 34,2 | 40,7 | 47,7 | 53,8 | 54,0 | 60,8 | 72,6 | 91,4 |
| 4 | 1 Teil C<br>0,5 Teile Tetrazol 2 | 15,7 | 25,6 | 35,6 | 47,2 | 58,8 | 69,8 | 78,8 | 88,9 | | | | | | |

Beispiele 5-8: Lichtstabilität

100 g einer Trockenmischung bestehend aus der unten angegebenen Rezeptur werden auf einem Mischwalzwerk 5 Minuten bei 190° C gewalzt. Vom gebildeten Walzfell werden in einer hydraulischen Presse bei 180° C und 200 bar während einer Minute 0,5 mm dicke Platten hergestellt.

Diese Platten werden mit Licht einer Wellenlänge >290 nm bestrahlt. Der durch die Strahlung bewirkte Grad der Farbänderung wird nach ASTM D 1925-70 als Farbabstand (ΔE) oder als "Yellowness-Index" (YI) bestimmt.

Die Ergebnisse sind in den Tabellen 3a und b aufgeführt.

Rezeptur:

| | |
|---|---|
| Schlagzäh-modifiziertes Polyvinylchlorid (Polyblend mit Ethylen-Vinylacetat) | 100 Teile |

Stabilisatorsystem gemäss Tabellen 3a und b.

Tabelle 3a:

| Beispiel | Stabilisatorsystem | YI vor der Belichtung | YI nach 168 Stunden Belichtung |
|---|---|---|---|
| 5 | 1 Teil A<br>0,5 Teile Tetrazol 1 | 22 | 29 |
| 6 | 1 Teil Dioctylzinnmaleat<br>0,5 Teile Tetrazol 1 | 59 | 54 |
| 7 | 1 Teil Antimon-tris[thioglykolat]<br>0,5 Teile Tetrazol 1 | 26 | 54 |

Tabelle 3b:

| Beispiel | Stabilisatorsystem | ΔE vor der Belichtung | ΔE nach 168 Stunden Belichtung |
|---|---|---|---|
| 8 | 2 Teile D<br>0,5 Teile Tetrazol 1 | 16 | 19 |

Beispiele 9-13: Lichtstabilität

Die Proben werden in Analogie zu den Beispielen 5-8 hergestellt und geprüft. Die Ergebnisse sind in den Tabellen 4a, 4b und 5 aufgeführt.

I) Transparente Anwendung

Rezeptur:

Schlagzäh-modifiziertes Polyvinylchlorid (Polyblend mit Ethylen-Vinylacetat) 100 Teile

Stabilisatorsystem gemäss Tabellen 4a und b

Tabelle 4a:

| Beispiel | Stabilisatorsystem | YI vor der Belichtung | YI nach 168 h Belichtung |
|---|---|---|---|
| 9 | 1 Teil A<br>1 Teil Tetrazol 2 | 13 | 63 |
| 10 | 1 Teil Dioctylzinnmaleat<br>1 Teil Tetrazol 2 | 16 | 46 |
| 11 | 1 Teil Antimon-tris[thioglykolat]<br>1 Teil Tetrazol 2 | 12 | 91 |

Tabelle 4b:

| Beispiel | Stabilisatorsystem | ΔE vor der Belichtung | ΔE nach 168 Stunden Belichtung |
|---|---|---|---|
| 12 | 2 Teile D<br>1 Teil Tetrazol 2 | 22 | 24 |

II) Weiss pigmentierte Anwendung

Rezeptur:

| | | |
|---|---|---|
| unmodifiziertes S-PVC (Polyvinylchlorid; K-Wert 65) | 100 | Teile |
| ®Paraloid KM 334 B | 5 | Teile |
| ®Paraloid K 120 N | 1,4 | Teile |
| ®Paraloid K 175 | 0,6 | Teile |
| Kalziumstearat | 1,5 | Teile |
| ®Irgawax 367 (Gleitmittel) | 1,0 | Teile |
| Titandioxid | 6,0 | Teile |

Stabilisatorsystem gemäss Tabelle 5

(®Paraloid KM 334 B, ®Paraloid K 120 N und ®Paraloid K 175 sind übliche Verarbeitungshilfen für Polyvinylchlorid.)

Tabelle 5:

| Beispiel | Stabilisatorsystem | YI vor der Belichtung | YI nach 840 Stunden Belichtung |
|---|---|---|---|
| 13 | 1,5 Teile A<br>0,5 Teile Tetrazol 2 | 6,7 | 44 |

## Patentansprüche

1. Chlorhaltiges Polymerisat enthaltend a) mindestens eine Verbindung der Formel I

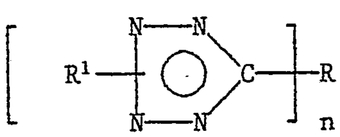 (I),

worin $R^1$ Wasserstoff, $C_1$-$C_4$-Alkyl, $C_5$-$C_6$-Cycloalkyl, Phenyl oder durch $C_1$-$C_4$-Alkyl oder Halogen substituiertes Phenyl ist, n 1 oder 2 bedeutet und wenn n 1 ist, R $C_1$-$C_{20}$-Alkyl, durch -OH oder -SH substituiertes $C_1$-$C_{20}$-Alkyl, durch

-O-, -S-, 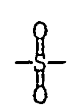 , 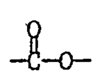 oder 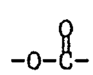

unterbrochenes $C_2$-$C_{20}$-Alkyl, Phenyl, durch $C_1$-$C_4$-Alkyl substituiertes Phenyl, Benzyl, durch $C_1$-$C_4$-Alkyl substituiertes Benzyl, $C_5$-$C_6$-Cycloalkyl oder $-NR^2R^3$ bedeutet, worin $R^2$ und $R^3$ gleich oder verschieden sind und die für $R^1$ angegebenen Bedeutungen besitzen, und wenn n 2 ist, R eine direkte Bindung, $C_1$-$C_{10}$-Alkylen, durch Phenyl, Benzyl, -OH, $C_1$-$C_4$-Alkoxy, $C_1$-$C_{20}$-Acyloxy, Phenylsulfonyl oder durch $C_1$-$C_4$-Alkylsulfonyl substituiertes $C_1$-$C_{10}$-Alkylen oder durch

-O-, -S-, 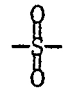 , 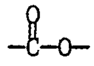 oder 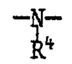 unterbrochenes

$C_2$-$C_{10}$-Alkylen bedeutet, worin $R^4$ Wasserstoff, $C_1$-$C_4$-Alkyl, Phenyl, Benzyl, Naphthyl, Cyclohexyl oder $C_1$-$C_{20}$-Acyl ist, oder R ferner $C_2$-$C_{10}$-Alkyliden, Phenylen, Benzylen oder Xylylen bedeutet, und b) mindestens eine Organozinnverbindung und/oder Bleiverbindung und/oder organische Antimonverbindung.

2. Chlorhaltiges Polymerisat gemäss Anspruch 1, worin für den Fall n = 1 R $C_1$-$C_{12}$-Alkyl, durch -O-, -S- oder 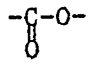

unterbrochenes $C_2$-$C_{12}$-Alkyl oder durch -OH oder -SH substituiertes $C_1$-$C_{12}$-Alkyl, Phenyl, Benzyl oder $-NR^2R^3$ bedeutet, worin $R^2$ und $R^3$ unabhängig voneinander Wasserstoff oder $C_1$-$C_4$-Alkyl sind, und für den Fall n = 2 R $C_1$-$C_6$-Alkylen, durch -O-, -S- oder -N($R^4$)- unterbrochenes $C_2$-$C_6$-Alkylen oder durch -OH substituiertes $C_1$-$C_6$-Alkylen, Phenylen, Benzylen oder Xylylen ist.

3. Chlorhaltiges Polymerisat gemäss Anspruch 1, worin $R^1$ Wasserstoff, $C_1$-$C_4$-Alkyl oder Phenyl bedeutet.

4. Chlorhaltiges Polymerisat gemäss Anspruch 3, worin $R^1$ Wasserstoff ist.

5. Chlorhaltiges Polymerisat gemäss Anspruch 1, worin n 1 ist und R $C_1$-$C_6$-Alkyl, durch -OH substituiertes $C_1$-$C_6$-Alkyl oder $-NR^2R^3$ bedeutet, worin $R^2$ und $R^3$ unabhängig voneinander Wasserstoff oder $C_1$-$C_4$-Alkyl sind.

6. Chlorhaltiges Polymerisat gemäss Anspruch 5, worin n 1 ist und R $-NH_2$ bedeutet.

7. Chlorhaltiges Polymerisat gemäss Anspruch 1, worin n 2 ist und R $C_1$-$C_6$-Alkylen, durch -S-, -O- oder Phenylimino unterbrochenes $C_2$-$C_6$-Alkylen oder durch -OH substituiertes $C_1$-$C_6$-Alkylen bedeutet.

8. Chlorhaltiges Polymerisat gemäss Anspruch 1, worin n 2 ist und R $C_1$-$C_6$-Alkylen oder durch -S- unterbrochenes $C_2$-$C_6$-Alkylen bedeutet.

9. Chlorhaltiges Polymerisat gemäss Anspruch 1, worin n 2 bedeutet.

10. Chlorhaltiges Polymerisat gemäss Anspruch 1, enthaltend mindestens eine Verbindung der Formel

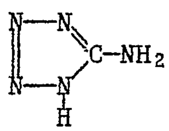 , 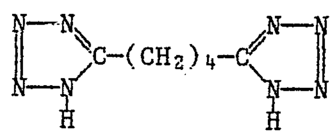 oder

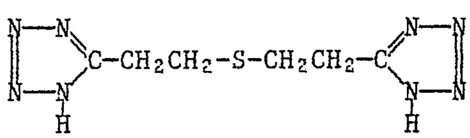 .

11. Chlorhaltiges Polymerisat gemäss Anspruch 1, enthaltend a) mindestens eine Verbindung der Formel I und b) mindestens eine Organozinnverbindung und/oder Bleiverbindung.

12. Chlorhaltiges Polymerisat gemäss Anspruch 1, enthaltend a) mindestens eine Verbindung der Formel I und b) mindestens eine Organozinnverbindung.

13. Chlorhaltiges Polymerisat gemäss Anspruch 1, dadurch gekennzeichnet, dass es sich bei dem chlorhaltigen Polymerisat um Polyvinylchlorid handelt.

14. Verwendung eines Gemisches enthaltend a) mindestens eine Verbindung der Formel I gemäss Anspruch 1 und b) mindestens eine Organozinnverbindung und/oder Bleiverbindung und/oder organische Antimonverbindung zum Stabilisieren von einem chlorhaltigen Polymerisat gegen den schädigenden Einfluss von Licht und/oder Wärme.